# EUROPEAN PATENT APPLICATION

(11) **EP 3 177 011 A1**
(43) Date of publication of application: **07.06.2017**
(21) Application number: 15306914.1
(22) Date of filing: 02.12.2015
(51) Int. Cl.: H04N 9/04, H04N 13/02

(54) **ACQUISITION DEVICE FOR A PLENOPTIC CAMERA AND METHOD OF PROCESSING A RAW IMAGE ACQUIRED WITH THE ACQUISITION DEVICE**

(71) Applicant: Thomson Licensing, 92130 Issy-les-Moulineaux (FR)
(72) Inventor: DRAZIC, VALTER, 35576 CESSON SEVIGNE CEDEX (FR); SABATER, NEUS, 35576 CESSON SEVIGNE CEDEX (FR); SCHLOSSER, Markus, 76137 Karlsruhe (DE); STAUDER, JURGEN, 35576 CESSON SEVIGNE CEDEX (FR)
(74) Representative: Huchet, Anne

(57) **Abstract**

An acquisition device (302) for a plenoptic camera (3), the acquisition device (302) comprising a microlens array (31) that comprises a plurality of microlenses, a photosensor array (33) that comprises a plurality of photosensors and a color filter array (32) that comprises a plurality of color filters, characterized in that the color filter array (32) is arranged with regard to the photosensor array (33) so that each color filter covers a group of a plurality of adjacent photosensors, the plurality of color filters being optically associated with the plurality of microlenses so that at least two different color filters are optically associated with one microlens.

## Description

### 1. Technical domain

The present disclosure relates to the domain of plenoptic camera and more specifically to the acquisition device of a plenoptic camera. The present disclosure also relates to the processing of a raw image acquired with the acquisition device of a plenoptic camera.

### 2. Background

A plenoptic camera, also called light-field camera, acquires different views of a same scene. To obtain the different views, a raw image (comprising the data collected by a photosensor array of the plenoptic camera) is demosaiced and de-multiplexed. The demosaicing enables it to recover a full color raw image, i.e. to recover full color information (for example RGB information, RGB standing for "Red", "Green" and "Blue") for the pixels of the raw image while the raw image acquired with the plenoptic camera associates only one color component (R, G or B for example) with each pixel. The demultiplexing enables to recover the different views of the scene, i.e. to group the pixels of the demosaiced raw image according to the view they belong to.

The demosaicing and demultiplexing steps may lead to view-crosstalk artifacts, i.e. color information coming from one of the different views ends up in another view, leading to visible artifacts when rendering the different views of the scene.

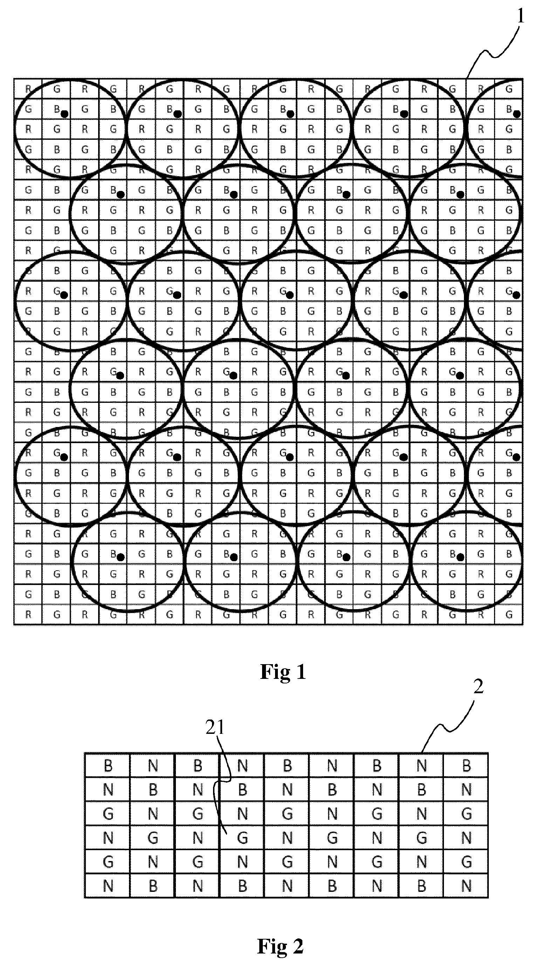

**Figure 1** shows a raw image 1 or part of it acquired with a classical plenoptic camera with the associated microlenses of the microlens array of the plenoptic camera. The raw image 1 consists of an array of pixels, one color information being associated with each pixel according to a determined pattern, which comprises 50 % green ('G'), 25 % red ('R') and 25 % blue ('B') in the example of a Bayer filter, such a pattern being also called RGGB pattern. The RGGB pattern is repeated for each block of 4 pixels (2 rows and 2 columns) of the raw image 1 over the whole raw image 1. To recover a determined view of the scene in a plenoptic 1 system layout (i.e. an image of the scene according to a determined point of view), corresponding pixels of each sub-image are collected, one given sub-image gathering the pixel of the raw image under one given microlens, during the demultiplexing process. The microlenses of the microlens array are represented with circle lines on Figure 1.

**Figure 2** shows a collection 2 of corresponding pixels of the raw image forming a determined view. According to the example of figure 2, the pixels of each micro-image (i.e. under each microlens) having the same row number and column number in each micro-image (for example row number = 2 and column number = 2) are collected. As the microlenses are arranged according to a quincunx on Figure 1, a pixel without color information is inserted between two color pixels, this pixel being annotated with a 'N', N standing for 'No information'. The pixels extracted from the raw image 1 to form the collection 2 but the 'N' pixels of Figure 2 are identified with a black point on Figure 1. As can be seen on Figure 2, the R, G and B color information is not uniformly distributed over the collection 2, which may lead to artifacts when recovering the full color information for each pixel of the collection 2 during the demosaicing process. Considering a given pixel, for example a green pixel 21, full color information may be obtained by interpolating the missing color, i.e. red and blue according to the example of the considered green pixel 21. In this example, the considered pixel 21 corresponds to the pixel belonging to the fourth row (the first row corresponding to the upper row) and to the fourth column (the first column corresponding to the first column on the left hand-side), it appears that no pixel with red information exists in the collection 2 and that the closest pixel with blue information is not located in the immediate vicinity of the pixel 21. It means that the red and blue pixels used to recover full color information are far away from the considered pixel 21, with a risk that said pixels do not belong to the same object of the scene as the considered pixel 21, leading to potential artifacts. The same issue exists for determining the 'N' pixels that are recovered by interpolating R, G and B pixels of the neighborhood of each of the 'N' pixels.

### 3. Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to an acquisition device for a plenoptic camera, the acquisition device comprising a microlens array that comprises a plurality of microlenses, a photosensor array that comprises a plurality of photosensors and a color filter array that comprises a plurality of color filters. The color filter array is arranged with regard to the photosensor array in such a way that each color filter covers a group of a plurality of adjacent photosensors, the plurality of color filters being optically associated with the plurality of microlenses according to a determined pattern in such a way that at least two different color filters are optically associated with one microlens.

According to a specific characteristic, the microlenses of the microlens array are arranged according to a checkerboard pattern, each color filter having a form of a square, each side of the square having a size equal to a value corresponding to a distance between centers of two adjacent microlenses arranged on a same row.

According to a particular characteristic, the microlenses of said microlens array are arranged according to a quincunx, each color filter having a form of a rectangle, a first side of said rectangle having a size equal to a value corresponding to a distance between centers of two adjacent microlenses according to a horizontal direction and a second side of said rectangle having a size equal to a value corresponding to a distance between centers of two adjacent microlenses according to a vertical direction.

According to a specific characteristic, the at least two different color filters optically associated with one microlens each cover a similar number of photosensors under said one microlens.

According to a particular characteristic, the color filter array is arranged on the photosensor array.

According to a specific characteristic, the acquisition device further comprises at least one processor associated with a memory, the at least one memory being configured for demultiplexing and demosaicing a raw image acquired by the photosensor array.

According to a particular characteristic, the at least one processor is further configured to determine center point locations of microlens micro-images formed on the photosensor array under the microlenses, the center point locations being determined from information representative of surface of the microlens micro-images covered by each color filter.

The present disclosure also relates to a method of processing a raw image of a scene acquired with an acquisition device for a plenoptic camera, the acquisition device comprising a microlens array that comprises a plurality of microlenses, a photosensor array that comprises a plurality of photosensors and a color filter array that comprises a plurality of color filters. The method comprises obtaining color information for pixels of the raw image from the photosensor array, a color filter array being arranged with regard to the photosensor array in such a way that each color filter covers a group of a plurality of adjacent photosensors, the plurality of color filters being optically associated with the plurality of microlenses according to a determined pattern in such a way that at least two different color filters are optically associated with one microlens.

According to a specific characteristic, the method further comprises demultiplexing and demosaicing the raw image.

According to a particular characteristic, the method further comprises determining center point locations of microlens micro-images formed on the photosensor array under the microlenses, the center point locations being determined from information representative of surface of the microlens micro-images covered by each color filter.

The present disclosure also relates to a plenoptic camera comprising a main lens and the acquisition device.

The present disclosure also relates to a telecommunication device comprising the plenoptic camera.

The present disclosure also relates to a computer program product comprising instructions of program code for executing at least a step of the method of processing a raw image, when the program is executed on a computer.

The present disclosure also relates to a non-transitory processor readable medium having stored therein instructions for causing a processor to perform at least a step of the method of processing a raw image.

### 4. List of figures

The present disclosure will be better understood, and other specific features and advantages will emerge upon reading the following description, the description making reference to the annexed drawings wherein:
- figure 1 shows a raw image acquired with a plenoptic camera of the background art;
- figure 2 shows a collection of pixels of the raw image of figure 2 used to build a determined view, according to the background art;
- figure 3 shows an acquisition device in a plenoptic camera, according to a particular embodiment of the present principles;
- figures 4, 5, 6 and 7 each show color filters associated with microlenses of the acquisition device of figure 3, according to particular embodiments of the present principles;
- figure 8 shows a method of processing a raw image acquired with the acquisition device of figure 3, according to a particular embodiment of the present principles;
- figure 9 shows a telecommunication device comprising the plenoptic camera of figure 3, according to a particular embodiment of the present principles.

### 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, an acquisition device adapted to a plenoptic camera comprises a microlens array that comprises a plurality of microlenses, a photosensor array that comprises a plurality of photosensors and a color filter array (CFA) that comprises a plurality of color filters. The color filter is for example arranged on the photosensor array with regard to the microlens array in such a way that each color filter covers a group of a plurality of adjacent photosensors, the plurality of color filters being optically associated with the plurality of microlenses according to a determined pattern in such a way that at least two different color filters are optically associated with one microlens. In other words, the surface covered by one micro-image (under one microlens) on the photosensor array comprises at least two complementary parts, each part being covered by a different color filter and covering a plurality of adjacent photosensors of the photosensor array.

The specific arrangement of the color filter array with regard to the microlens array and the photosensor array enables it to reduce crosstalk artifacts that may appear during the demosaicing process. Indeed, the demultiplexing of a raw image acquired with the acquisition device of the present principles generates array of pixels with a distribution of pixels of complementary color (for example red, green and blue) all over the array of pixels.

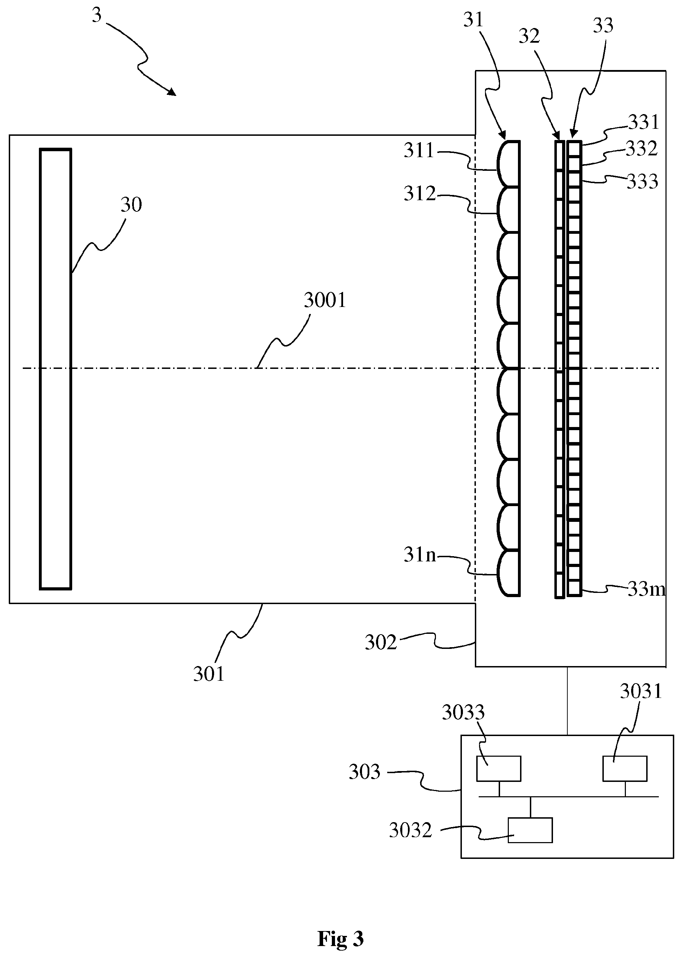

**Figure 3** shows a plenoptic camera 3 according to a particular embodiment of the present principles. The plenoptic camera comprises a lens unit 301 (corresponding to an optical assembly) and an acquisition device 302.

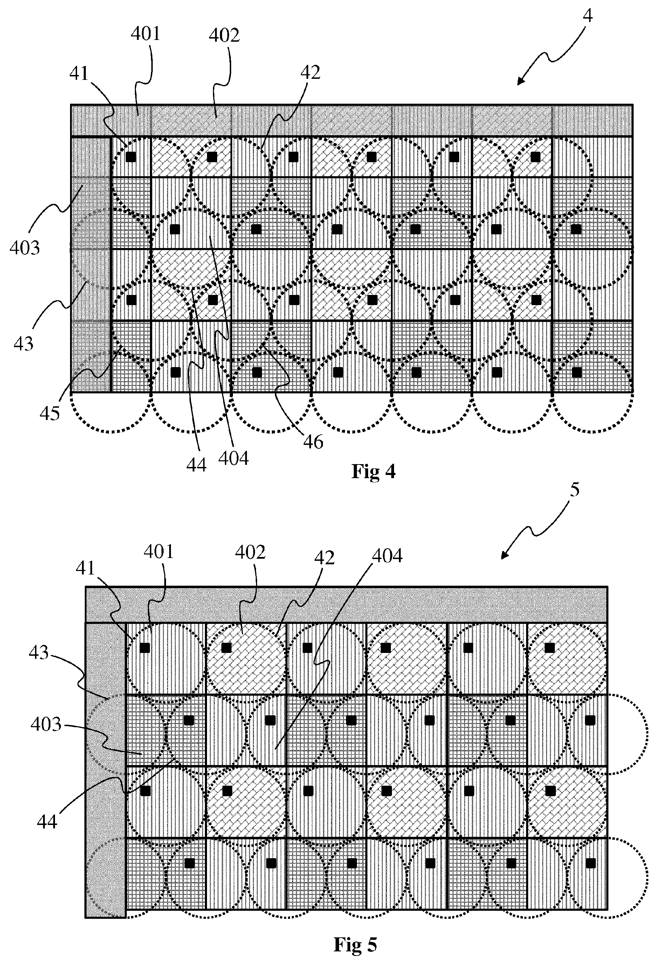

The lens unit 301 is advantageously adapted to be associated with the acquisition device 302. The acquisition device 302 comprises a photosensor array 33, which comprises a plurality m of photosensors 331, 332, 333 to 33m. Each photosensor corresponds to a pixel of the raw image of the scene acquired with the photosensor array, with each pixel encompassing a part (also called a point) of the scene. For purposes of illustration, the photosensor array 33 is shown with a relative small number of photosensors 331 to 33m. Naturally, the number of photosensors is not limited by the illustration of figure 3 but extends to any number of photosensors, for example several thousand or several millions of photosensors. For example, in a 12.4 megapixel camera, a pixel will correspond to a photosensor (e.g. corresponding to an array of 4088 x 3040 pixels / photosensors). A color filter array (CFA) 32 may be arranged on the photosensor array 33, for example coated on the photosensors array 33. The CFA 32 typically arranges RGB (Red, Green and Blue) color filters on the photosensor array 33. According to a variant, the CFA 32 is arranged on the microlens array 31, also called lenslet array. According to other examples, the CFA 32 comprises a RGBY (Red, Green, Blue and Yellow) pattern of color filters or a CMY (Cyan, Magenta and Yellow) pattern of color filters. The color filters are arranged with regard to the photosensor array 33 in such a way that each color filter covers a surface of the photosensors array greater than or equal to 2 photosensors (i.e. each color filter covers a surface of the raw image greater than or equal to 2 pixels) and that two or more different color filters are associated with each micro-image, i.e. each micro-image is covered by at least two different color filters, for example 2, 3 or 4 color filters. For example, for each micro-image, a first part of the surface formed by the micro-image on the raw image is covered by (or associated with) a first color filter and a second part of the surface formed by said micro-image on the raw image is covered by (or associated with) a second color filter, the first color filter being different from the second color filter, the first and second parts of said micro-image forming the whole surface of said micro-image. Different exemplary arrangements of the color filters with regard to the photosensor array (raw image) will be described with more details with regard to figures 4 to 7.

The acquisition device 302 also comprises a microlens array 31 comprising n microlenses 311, 312 to 31 n, n being an integer greater than or equal to 2. A group of photosensors of the photosensor array 33 are optically associated with each microlens 311 to 31 n of the microlens array 31. For example, each microlens 311 to 31 n of the microlens array 11 is sized to correspond to an array of 2x2, 4x4, 10x10 or 100x100 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables it to acquire raw data representative of a pixel of the scene according to one position (acquisition of as many parallaxes as pixels). The color information associated with each photosensor of the photosensors array (i.e. with each pixel of the raw image) depends on the color filter array associated with said each pixel.

For associating the lens unit 301 with the acquisition device 302, the lens unit 301 comprises a first attaching part and the acquisition device 302 comprises a second attaching part, the first and second attaching parts being compatible with each other. Thanks to the first and second attaching parts, the lens unit 301 may be clipped onto the acquisition device 302 or the lens unit 301 may be screwed with the acquisition device 302. An example of such first and second attaching parts of a lens unit configured to be associated with a camera body may be found in the Japanese patent application JP2013-105151A, which was published on May 30, 2013. The first and second attaching parts are configured in such a way that, once the lens unit 301 and the acquisition device 302 have been put together, the lens unit 301 and the acquisition device 302 form a plenoptic camera configured for acquiring multiple views of a scene at each acquisition of the scene. According to a variant, the lens unit 301 and the acquisition device 302 can collectively form one single body and are assembled without being detachable.

The lens unit 301 comprises a camera lens 30, also called a main lens or primary lens, which is advantageously formed of one or more lens elements, only one lens element 30 being depicted in figure 3 for clarity purpose.

The plenoptic camera 3 may comprise a hardware component 303 configured for controlling the plenoptic camera 3 and/or the acquisition device 32, for example for processing the raw image acquired with the acquisition device 302, i.e. for example for demultiplexing and/or demosaicing the raw image to obtain the different views of the scene according to the different point of views. The component 303 is further configured for detecting a change in one or more parameters of the camera lens 30, for example a change of the focal length of the camera lens and/or a change of the focusing distance occurring when focalizing or zooming. The component 303 may be comprised in the acquisition device 302 or in the lens unit 301. The component 303 comprises one or several processors 3031 associated with a memory, for example a Random Access Memory or RAM 3032 comprising one or more registers. The memory stores instructions of one or more processes implementing the method of processing the raw image. According to a variant, the component 303 takes the form of a programmable logical circuit of type FPGA (Field-Programmable Gate Array) for example, ASIC (Application-Specific Integrated Circuit) or a DSP (Digital Signal Processor). The component 303 comprises a power source 3033 comprising for example a variable voltage source capable of applying various voltages to the lens unit 301 and/or to the acquisition device 302 to control them. The power source may be controlled by the processor 3031. The component 303 may also comprise an interface configured to receive and/or transmit data such as control parameters input by, for example, a user via a user interface to set the plenoptic camera 3, the user interface being for example displayed on a display screen (for example a LCD or an OLED display) arranged for example on the acquisition device 302. The component 303 can also receive and/or transmit data to and/or from sources remote from the plenoptic camera 3.

According to a variant, the component 303 is not comprised in the plenoptic camera 3 but connected to the plenoptic camera 3 via a wired connection (for example via USB (Universal Serial Bus)) or via a wireless connection (for example via Bluetooth, Wi-Fi or ZigBee). According to this variant, the component 303 comprises a transmitter to exchange data with the plenoptic camera 3. According to this variant, the power source 3033 is comprised in the plenoptic camera 3.

The plenoptic camera 3 is equally of the type 1.0, corresponding to a plenoptic camera wherein the distance between the microlens array 31 and the photosensor array 33 is equal to the microlenses focal length, or of the type 2.0 otherwise (also called focused plenoptic camera).

**Figures 4 to 7** show examples of the arrangement of the color filters with regard to the raw image acquired with the acquisition device 302 and to the associated microlens array 31.

**Figure 4** shows a first exemplary arrangement 4 of color filters of a color filter array (CFA) on a part of the raw image. The projection of the microlenses 41 to 46 of the microlens array is also shown, the projection of the microlenses being represented with circle dotted lines. In the example of figure 4, the microlenses are arranged according to a quincunx, i.e. a geometric pattern consisting of five microlenses, e.g. microlenses 41, 42, 44, 45 and 46, arranged in a cross, with four of the microlenses, e.g. microlenses 41, 42, 45 and 46, forming a square or a rectangle and a fifth microlens, e.g. microlens 44, at the center of the pattern, this geometric pattern being repeated over the microlens array. The CFA is composed of 3 different color filters, for example color filters R, G and B (standing for Red, Green and Blue) arranged by blocks of four color filters, i.e. the 4 color filters of a block being arranged in 2 adjacent rows and 2 adjacent columns, the color filter 401 being the top left color filter of the block (row number 1, column number 1), the color filter 402 being the top right color filter of the block (row number 1, column number 2), the color filter 403 being the bottom left color filter of the block (row number 2, column number 1) and the color filter 404 being the bottom right color filter of the block (row number 2, column number 2). According to the example of figure 4, the color filters pattern of a bock is GRBG, i.e. the color filter 401 is a green color filter (shown with vertical lines), the color filter 402 is a red color filter (shown with diagonal bricks), the color filter 403 is a blue color filter (shown with small grid) and the color filter 404 is a green color filter. The pattern GRBG is repeated as adjacent blocks to form the whole CFA. The CFA is arranged with regard to the microlens array in such a way that each of the micro-images associated with the microlenses of a first row of the microlens array is covered, in a complementary way, by four color filters and each of the micro-images associated with the microlenses of a second row (which is adjacent to the first row) of the microlens array is covered, in a complementary way, by two color filters. The area covered by each color filter is strictly bigger than one pixel of the raw image. The areas of a micro-image covered by the different color filters have substantially the same size, i.e. the same surface. It is understood with "substantially the same" that the difference between the sizes of two areas is less than a determined value, for example less than 5%, 3% or 1 % for example. For example, considering the microlens 41 of the first row of the microlens array, a first part of the area of the raw image covered by the projection of the microlens 41 is covered by the green color filter 401, a second part of the area of the raw image covered by the projection of the microlens 41 is covered by the red color filter 402, a third part of the area of the raw image covered by the projection of the microlens 41 is covered by the blue color filter 403 and a fourth part of the area of the raw image covered by the projection of the microlens 41 is covered by the green color filter 404. The first, second, third and fourth part are complementary in the sense that they do not overlap and the whole surface covered by these four parts corresponds to the whole surface covered by the projection of the microlens 41 on the raw image. Considering the microlens 44 of the second row of the microlens array, a first part of the area of the raw image covered by the projection of the microlens 44 is covered by a green color filter and a second part of the area of the raw image covered by the projection of the microlens 41 is covered by a red color filter, the first and second parts being complementary in the sense that they do not overlap and that the whole surface covered by these two parts corresponds to the whole surface covered by the projection of the microlens 44 on the raw image. Each color filter has the form of a rectangle, a first side of the rectangle having the size of the distance between two adjacent microlenses along the horizontal direction (i.e. on a same row, for example the distance between the centers of the microlenses 41 and 42) and a second side of the rectangle having the size of the distance between two adjacent microlenses along the vertical direction (i.e. according to a diagonal as the microlenses are arranged according to a quincunx, for example the distance between the centers of the microlenses 41 and 44).

Such an arrangement of the color filters with regard to the microlenses enables to reduce the artifacts occurring when demosaicing the raw image of the demultiplexed views of the scene obtained from the raw image. Black pixels are illustrated on figure 4, one black pixel for each micro-image formed under each microlens. Said black pixels are corresponding pixels as they all belong to a same view, i.e. to a same view of the scene according to a same point of view, as they are located at the same position in each micro-image. Gathering the black pixels enables it to form the view, before demosaicing, as follows:

**Table 1**

| | | | | | | | | | | | |
|---|---|---|---|---|---|---|---|---|---|---|---|
| G | N | R | N | G | N | R | N | G | N | R | N |
| N | G | N | B | N | G | N | B | N | G | N | B |
| G | N | R | N | G | N | R | N | G | N | R | N |
| N | G | N | B | N | G | N | B | N | G | N | B |

Wherein G corresponds to a green pixel, R to a red pixel, B to a blue pixel and N for a pixel with no color information. The pixel 'G' of the first row and first column in table 1 is obtained from the micro-image associated with the microlens 41, the pixel 'R' of the first row and the third column of table 1 is obtained from the micro-image associated with the microlens 42 following the microlens 41 on the first row of the microlens array and so on. The presence of pixels 'N' without color information is due to the quincunx arrangement of the microlenses (and thus of the micro-images). Due to the quincunx arrangement, microlenses of a same column are aligned only one row in two leading to a missing pixel, i.e. a pixel with no color information, one pixel on two. By comparing the table 1 with the Figure 2, it can be seen that the distribution of the R, G and B pixels in Table 1 is more uniform than in figure 2. Recovering the missing color information for a given pixel is more confident than in the view of Figure 2 as finding missing color (that is usable in the interpolation process for recovering the missing color information) in the vicinity of said given pixel is possible.

**Figure 5** shows a second exemplary arrangement 5 of color filters of a color filter array on a part of the raw image. In the example of figure 5, the microlenses are arranged according to a quincunx as in the example of figure 4. As in figure 4, the CFA is composed of 3 different color filters that are arranged according to the same pattern as the one described with regard to figure 4, i.e. by blocks of 4 color filters GRBG repeating over the whole surface of the CFA. The main difference between the example of figure 5 and the example of figure 4 lies in the fact that the arrangement of the CFA with regard to the microlens array is different. In the example of figure 4, the area of each of the micro-images associated with the microlenses of the first row of the microlens array is covered by two different color filters while the area of each of the micro-images associated with the microlenses of the second row of the microlens array is covered by four different color filters while, the different areas covered by the different parts being of unequal size. For example a first part of the micro-image associated with the microlens 41 is covered by the green color filter 401 and a second part of the micro-image associated with the microlens 41 is covered by the blue color filter 403, the first part being bigger than the second part, both first and second parts being strictly bigger than one pixel. The difference between the examples of figures 4 and 5 may be obtained by moving the CFA of the example of figure 4 to the right and to the bottom to obtain the arrangement of Figure 5.

Gathering the black pixels enables it to form the view, before demosaicing, as follows:

**Table 2**

| | | | | | | | | | | | |
|---|---|---|---|---|---|---|---|---|---|---|---|
| G | N | R | N | G | N | R | N | G | N | R | N |
| N | B | N | G | N | B | N | G | N | B | N | G |
| G | N | R | N | G | N | R | N | G | N | R | N |
| N | B | N | G | N | B | N | G | N | B | N | G |

By comparing the table 1 with the Figure 2, it can be seen that the distribution of the R, G and B pixels in Table 2, like in Table 1, is more uniform than in figure 2. Recovering the missing color information for a given pixel is more confident than in the view of Figure 2 as finding missing color information (that is usable in the interpolation process for recovering the missing color information) in the vicinity of said given pixel is possible.

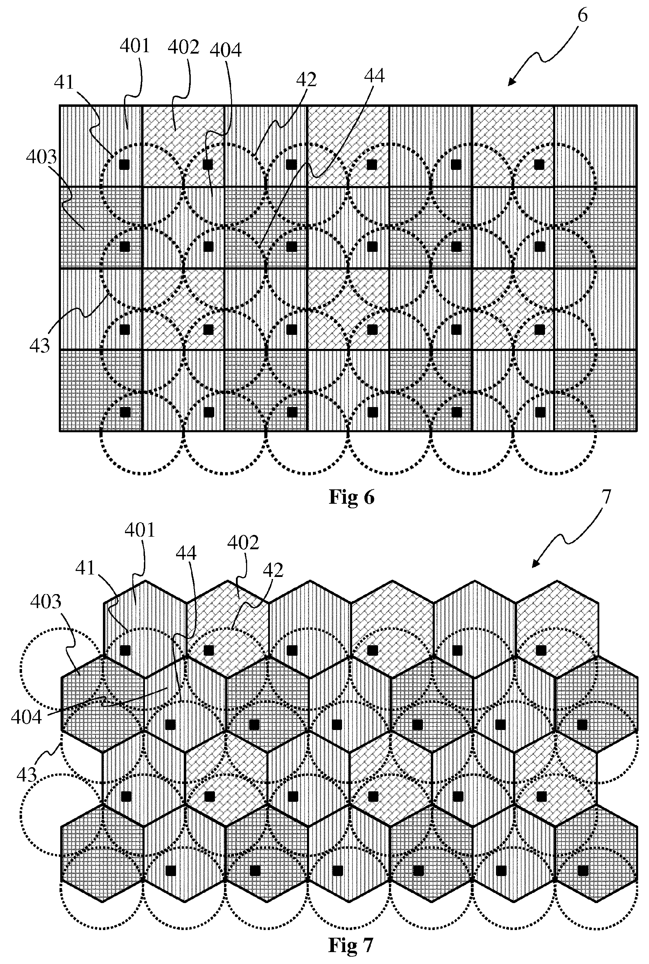

**Figure 6** shows a third exemplary arrangement 6 of color filters of a color filter array on a part of the raw image. In the example of figure 6, the microlenses are arranged according to a checkerboard pattern, i.e. the microlenses are arranged in rows and columns. As in figure 4, the CFA is composed of 3 different color filters that are arranged according to the same pattern as the one described with regard to figure 4, i.e. by blocks of 4 color filters GRBG repeating over the whole surface of the CFA. Each color filter has the form of a square, the size of the sides of the square corresponding to the distance between two adjacent microlenses. As the microlenses are arranged according to a checkerboard pattern, the distance between two adjacent microlenses of a same row is the same as the distance between two adjacent microlenses of a same column (i.e. the distance between the centers of the microlenses 41 and 42 is substantially the same as the distance between the centers of the microlenses 41 and 43, for example). In the example of figure 6, each micro-image associated with the microlenses of the microlens array are covered by four color filters, namely a red color filter, a blue color filter and two green color filters. The surface of each of the micro-image is subdivided into four parts having substantially the same size (i.e. ¼ of the surface of the micro-image) and each color filter of the 4 color filters GRBG covering said micro-image covers one different part of said four parts. For example, the upper left quarter of the micro-image of the microlens 41 is covered by the green color filter 401, the upper right quarter of the micro-image of the microlens 41 is covered by the red color filter 402, the bottom left quarter of the micro-image of the microlens 41 is covered by the blue color filter 403 and the bottom right quarter of the micro-image of the microlens 41 is covered by the green color filter 404.

Gathering the black pixels enables it to form the view, before demosaicing, as follows:

**Table 3**

| | | | | | | |
|---|---|---|---|---|---|---|
| G | R | G | R | G | R | G |
| B | G | B | G | B | G | B |
| G | R | G | R | G | R | G |
| B | G | B | G | B | G | B |

By comparing the table 1 with the Figure 2, it can be seen that the distribution of the R, G and B pixels in Table 3 is more uniform than in figure 2. Recovering the missing color information for a given pixel is more confident than in the view of Figure 2 as finding missing color information (that is usable in the interpolation process for recovering the missing color information) in the vicinity of said given pixel is possible.

**Figure 7** shows a fourth exemplary arrangement 7 of color filters of a color filter array on a part of the raw image. In the example of figure 7, the microlenses are arranged according to a quincunx pattern. As in figure 4, the CFA is composed of 3 different color filters that are arranged according to the same block pattern as the one described with regard to figure 4, i.e. by blocks of 4 color filters GRBG repeating over the whole surface of the CFA. The color filters of the CFA of figure 7 are arranged according to a quincunx pattern and has the form of a hexagon, in such a way that each micro-image associated with the microlenses of the microlens array is covered by 3 different color filters, each of the 3 color filters covering a surface of substantially the same size. For example, a third of the surface of the micro-image associated with the microlens 41 is covered by the green color filter 401, a third of the surface of the micro-image associated with the microlens 41 is covered by the blue color filter 403 and the last third of the surface of the micro-image associated with the microlens 41 is covered by the green color filter 404. Considering now the micro-image associated with the microlens 42 that is adjacent to the microlens 41 on the same row, a third of its surface is covered by the red color filter 402, another third of its surface is covered by the red color filter 404 and the last third of its surface is covered by a blue color filter. According to a variant, the surface of the micro-images is covered by a number of color filters different from 2 color filters, for example 2 or 4 color filters. To obtain this variant, the CFA illustrated on Figure 7 may be translated downward (or upward) and/or to the left (or to the right).

Gathering the black pixels enables it to form the view, before demosaicing, as follows:

**Table 4**

| | | | | | | | | | | | |
|---|---|---|---|---|---|---|---|---|---|---|---|
| G | N | R | N | G | N | R | N | G | N | R | N |
| N | G | N | B | N | G | N | B | N | G | N | B |
| G | N | R | N | G | N | R | N | G | N | R | N |
| N | G | N | B | N | G | N | B | N | G | N | B |

By comparing the table 1 with the Figure 2, it can be seen that the distribution of the R, G and B pixels in Table 4, like in Table 1, is more uniform than in figure 2. Recovering the missing color information for a given pixel is more confident than in the view of Figure 2 as finding missing color information (that is usable in the interpolation process for recovering the missing color information) in the vicinity of said given pixel is possible.

The arrangement of the color filters with regard to the photosensors array according to the present principles may also be helpful for calibrating the plenoptic camera, i.e. for determining the centers of the micro-images formed on the raw image acquired with the photosensors array. The centers are determined from non-white target, the image associated with the non-white target looks like the recording of a checkerboard (with different gray levels corresponding to the different sensitivities of the different color filters to the specific color of the calibration target). The ratio between the sizes of the different areas covered by the color filters (or between the lengths of their edges) underneath each microlens provides additional information about their center positions relative to the color filters pattern. As the color filters are arranged on the photosensors array, the exact position of the color filters is determined, i.e. known beforehand. Accordingly, the goal of the calibration process is not to determine their position or the position of the intersection points. The goal is rather to determine which color filter gets illuminated to a bigger extent (relative to the other color filters). The ratio in accumulated pixels between every possible pair of color filters underneath each microlens may be determined and compared with the ideally predicted ratio, the theoretical location of the color filters underneath each microlens being known.

When the calibrating occurs with white image(s), the ratio in accumulated luminance between every possible pair of color filters underneath each microlens may be determined and compared with the ideally predicted ratio, the theoretical location of the color filters underneath each microlens being known

According to a variant, the accumulated pixels (or luminance when the calibrating is performed with white image(s)) underneath each microlens lenslet (over all color channels) is determined, i.e. measured via the photosensors of the photosensors array. The way in which this accumulated luminance changes from one microlens to the next may then again be compared with the theoretical color filters pattern, which is known as corresponding to the design of the plenoptic camera.

For the micro-images that are only covered by two different color filters (i.e., that are either split horizontally or vertically, see for example the microlens 44 of figure 4), only a horizontal or a vertical offset may be determined, respectively, but at a higher precision. Furthermore, it is safe to assume that the lenslet array itself is perfectly regular (i.e., the spacing between the microlenses is constant). As a consequence, obtaining such one-dimensional measurements of the offset for these microlenses already provides more than enough information to determine the overall misalignment between the lenslet array and the photosensors array.

As far as a CFA formed of hexagons is concerned (see for example the exemplary embodiment of figure 7), its "natural" placement would, of course, be without any offset. In this case, the edges would typically be located in areas most affected by the vignetting. As shown in Figure 7, the hexagons may, however, be similarly shifted by half a diameter in both directions. In this case, every microlens will ideally cover three equally sized color patches. This shifted color filters pattern would, of course, also help in determining the micro-images centers.

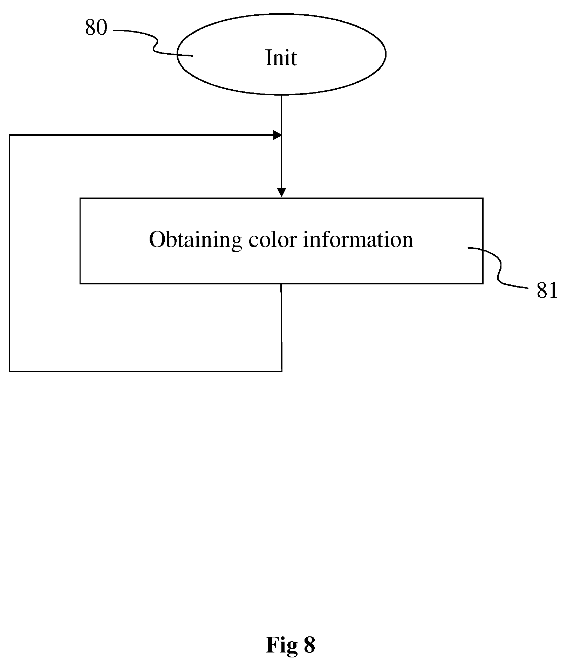

**Figure 8** shows a method of processing a raw image acquired with the photosensors array 33 of the acquisition device 302 of the plenoptic camera 1, according to a particular embodiment of the present principles.

During an initialization step 80, the different parameters of the plenoptic camera and the luminance value associated with the photosensors of the photosensors array are updated and/or initialized.

Then during a step 81, color information is obtained for each pixel of the raw image acquired with the photosensors array. The color information corresponds to a grey level (for example coded on 8, 10, 12 bits or even more) associated with a color, for example red, green or blue. The grey level corresponds to a luminance value that is obtained, for example measured, by the photosensors of the photosensors array, one photosensor of the photosensors array being associated with (or corresponding to) one pixel of the raw image. The color of the pixels of the raw image results from the distribution of the color filters of the CFA over the photosensors array. As described for example with regard to figures 4 to 7, the color filters are arranged in a way that each micro-image (the micro-images being optically associated with the microlenses, one micro-image being associated with one microlens, i.e. one micro-image being under one microlens) is covered by two or more color filters of different color. Each micro-image is for example covered by 2 different color filters (for example a green color filter and a red color filter, or a green color filter and a blue color filter or two green color filters and a blue color filter) or by 3 different color filters (for example one green color filter, one blue color filter and one red color filter or two green color filters, one blue color filter and one red color filter). Each micro-image covers an area (or a surface) of the raw image (or equivalently of the photosensors array). Each of the color filters covering a micro-image covers a part of the surface of the photosensors array corresponding to the micro-image, each part corresponding to two or more photosensors, the different parts covered by the color filters not overlapping and being complementary, i.e. the surface covered by the different parts covered by the color filters corresponds to the surface of the micro-image.

According to an optional variant, different views of the scene acquired with the plenoptic camera 1 are obtained by demultiplexing and demosaicing the raw image. The demultiplexing consists in gathering the corresponding pixels in each micro-images, i.e. one pixel in each micro-image, the different pixels having the same position (same coordinates) in each micro-image with regard to the center of each micro-image, for example each pixel with row number = X and column number = Y, X and Y being expressed in the space of each micro-image with the origin of the space corresponding to the center of the considered micro-image. Once demultiplexed, N arrays of pixels are obtained, N corresponding to the number of pixels of each micro-image. One color information may be associated with each pixel of the N arrays except for the pixels referenced 'N' in tables 1, 2 and 3 for example. In the demultiplexed views, only one color information is associated with each pixel (except for the pixels labelled 'N'), the missing color information being obtained during the demosaicing process. The demosaicing process consists in determining the missing color information for each pixel (for example the red and blue color information for a pixel having only the green color information obtained from the raw image during the demultiplexing process, or the green and blue color information for a pixel having only the red color information obtained from the raw image during the demultiplexing process or the red, green and blue color information for a pixel having no color information obtained from the raw image during the demultiplexing process). For a considered pixel (e.g. a green pixel) of a demultiplexed view, the missing color information (e.g. the red and blue color information) is for example obtained from the pixels surrounding the considered pixel in the demultiplexed view, i.e. the pixels of the spatial neighborhood of the considered pixel. For example, the red color information is obtained by interpolating the color information of one or more pixels of the neighborhood having received red color information from the raw image during the demultiplexing process and the blue color information is obtained by interpolating the color information of one or more pixels of the neighborhood having received blue color information from the raw image during the demultiplexing process. The missing color information used during the demosaicing process may be weighted in the interpolation, the weighting coefficient being for example a function of the distance between the considered pixel and the pixel of the neighborhood of the considered pixel used in the interpolation process for recovering the missing color information of the considered pixel. Thanks to the arrangement of the color filters with regard to the microlens array of the present principles, it is always possible to have pixels having received missing color information from the raw image in the close neighborhood of the considered pixel, for example within a circle centered on the considered pixel and having a few pixels as a radius (for example 2, 3, 4, 5 or 10 pixels), reducing or removing artifacts like crosstalk artifacts for example.

According to another optional variant, the center of a considered micro-image is determined by comparing the real ratio of the different parts of the surface of the considered micro-image covered by the different color filters with a theoretical ratio that is determined when building the acquisition device of the plenoptic camera, the arrangement of the CFA with regard to the microlens array being designed when building the acquisition device. When designing the acquisition device, a theoretical center for the considered pixel is known and associated with the theoretical ratio of the different color filters on the considered micro-image (which relates to a considered microlens). The shift between the real ratio and the theoretical ratio enables it to obtain a spatial shift information between the real center and the theoretical center. This process may be reiterated to determine the center of each micro-image.

According to another optional variant, a reference pixel of a considered micro-image is determined by determining the edges separating the different parts of the surface of the considered micro-image covered by the different color filters. This may be obtained by applying a Laplacian Edge Detector to the raw image. When a same pattern of color filters repeats over several micro-images, i.e. under several microlenses (for example as in the examples of figures 4 to 7), the barycentre of a part covered by a same color filter may be determined for several micro-images, knowing the edges of said part, which enable to obtain a reference pixel for said micro-images (which include the considered micro-image). As the geometric pattern formed by the microlenses is regular, a reference pixel may be obtained for the other micro-images from the determined reference pixels, enabling it to obtain one reference pixel for each micro-image.

The demultiplexing may then be performed by using the reference pixels or the centers of the micro-images as it is known for the skilled person in the art.

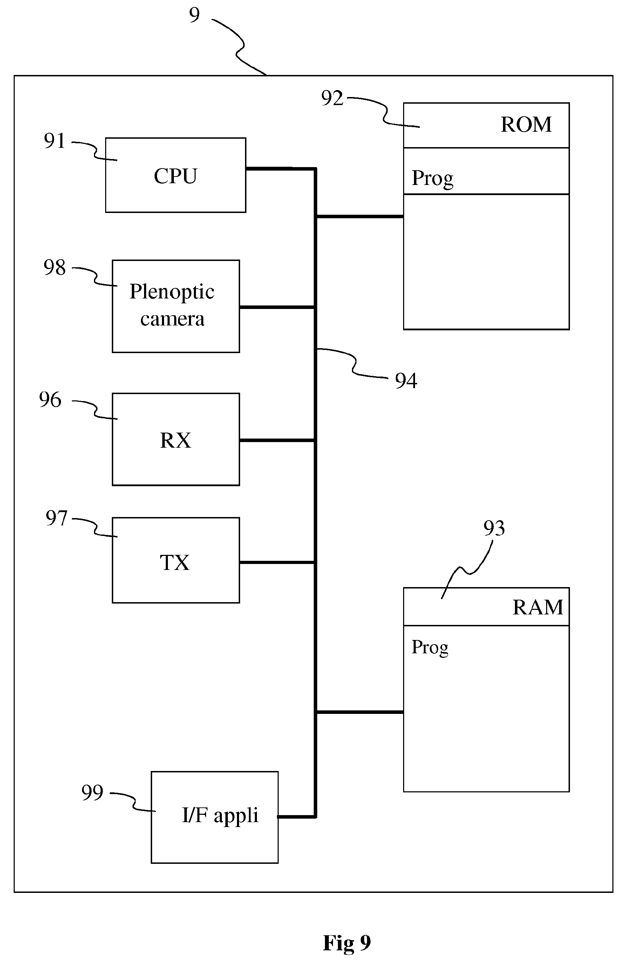

**Figure 9** diagrammatically illustrates a hardware embodiment of a telecommunication device 9, corresponding for example to a smartphone or a tablet.

The telecommunication device 9 comprises the following elements, connected to each other by a bus 94 of addresses and data, that also transports a clock signal:
- a microprocessor 91 (or CPU),
- a non-volatile memory of ROM (Read Only Memory) type 92,
- a Random Access Memory or RAM 93,
- a radio interface 96,
- an interface 97 adapted for the transmission of data,
- a plenoptic camera 98, corresponding for example to the plenoptic camera 3 of figure 3,
- an MMI (Man-Machine Interface) 99 adapted for displaying information for a user and/or inputting data or parameters.

It is noted that the word "register" used in the description of memories 92 and 93 designates in each of the memories mentioned, a memory zone of low capacity as well as a memory zone of large capacity (enabling a whole program to be stored or all or part of the data representing data received and decoded).

The memory ROM 92 comprises in particular a "prog" program.

The algorithms implementing the steps of the method specific to the present disclosure and described below are stored in the ROM 92 memory associated with the telecommunication device 9 implementing these steps. When powered up, the microprocessor 91 loads and runs the instructions of these algorithms.

The random access memory 93 notably comprises:
- in a register, the operating program of the microprocessor 91 responsible for switching on the telecommunication device 9,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 96,
- decoded data formed to be transmitted at the interface to the application 99.

Other structures of the telecommunication device 9 than those described with respect to figure 9 are compatible with the present disclosure. In particular, according to variants, the telecommunication device may be implemented according to a purely hardware realization, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 96 and the interface 97 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure being stored in the RAM.

Naturally, the present disclosure is not limited to the embodiments previously described.

In particular, the present disclosure is not limited to a plenoptic optical assembly but also extends to any device integrating such a plenoptic optical assembly, for example a plenoptic camera comprising a photosensors array or a telecommunication device comprising a photosensors array.

Telecommunication devices includes, for example, smartphones, smartwatches, tablets, computers, mobile phones, portable/personal digital assistants ("PDAs"), and other devices that facilitate communication of information between end-users but also set-top-boxes.

The method and control operations of the plenoptic camera and/or of the acquisition device described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. An acquisition device (302) for a plenoptic camera (3), the acquisition device (302) comprising a microlens array (31) that comprises a plurality of microlenses, a photosensor array (33) that comprises a plurality of photosensors and a color filter array (32) that comprises a plurality of color filters, **characterized in that** the color filter array (32) is arranged with regard to the photosensor array (33) so that each color filter covers a group of a plurality of adjacent photosensors, the plurality of color filters being optically associated with the plurality of microlenses so that at least two different color filters are optically associated with one microlens.

2. The acquisition device according to claim 1, wherein the microlenses of said microlens array being arranged according to a checkerboard pattern (6), each color filter (401 to 404) has a form of a square, each side of said square having a size equal to a value corresponding to a distance between centers of two adjacent microlenses (41, 42) arranged on a same row.

3. The acquisition device according to claim 1, wherein the microlenses of said microlens array being arranged according to a quincunx (4), each color filter (401 to 404) has a form of a rectangle, a first side of said rectangle having a size equal to a value corresponding to a distance between centers of two adjacent microlenses (41, 42) according to a horizontal direction and a second side of said rectangle having a size equal to a value corresponding to a distance between centers of two adjacent microlenses according to a vertical direction (41, 44).

4. The acquisition device according to one of claims 1 to 3, wherein said at least two different color filters optically associated with one microlens each cover a similar number of photosensors under said one microlens.

5. The acquisition device according to one of claims 1 to 4, wherein said color filter array (32) is arranged on said photosensor array (33).

6. The acquisition device according to one of claims 1 to 5, further comprising at least one processor (3031) associated with a memory (3032), said at least one memory being configured for demultiplexing and demosaicing a raw image acquired by said photosensor array (33).

7. The acquisition device according to claim 6, wherein said at least one processor (3031) is further configured for determining center point locations of microlens micro-images formed on the photosensor array (33) under said microlenses, the center point locations being determined from information representative of a surface of the microlens micro-images covered by each color filter.

8. A method of processing a raw image of a scene acquired with an acquisition device (302) for a plenoptic camera (3), the acquisition device comprising a microlens array that comprises a plurality of microlenses, a photosensor array that comprises a plurality of photosensors and a color filter array that comprises a plurality of color filters, **characterized in that** the method comprising obtaining (81) color information for pixels of said raw image from said photosensor array, a color filter array being arranged with regard to the photosensor array so that each color filter covers a group of a plurality of adjacent photosensors, the plurality of color filters being optically associated with the plurality of microlenses so that at least two different color filters are optically associated with one microlens.

9. The method according to claim 8, wherein the microlenses of said microlens array being arranged according to a checkerboard pattern, each color filter has a form of a square, each side of said square having a size equal to a value corresponding to a distance between centers of two adjacent microlenses arranged on a same row.

10. The method according to claim 8, wherein the microlenses of said microlens array being arranged according to a quincunx, each color filter has a form of a rectangle, a first side of said rectangle having a size equal to a value corresponding to a distance between centers of two adjacent microlenses according to a horizontal direction and a second side of said rectangle having a size equal to a value corresponding to a distance between centers of two adjacent microlenses according to a vertical direction.

11. The method according to one of claims 8 to 10, wherein said at least two different color filters optically associated with one microlens each cover a similar number of photosensors under said one microlens.

12. The method according to one of claims 8 to 11, wherein said color filter array is arranged on said photosensor array.

13. The method according to one of claims 8 to 12, further comprising demultiplexing and demosaicing said raw image.

14. The method according to one of claims 8 to 13, further comprising determining center point locations of microlens micro-images formed on the photosensor array under said microlenses, the center point locations being determined from information representative of surface of the microlens micro-images covered by each color filter.

15. A plenoptic camera comprising a main lens and an acquisition device according to one of claims 1 to 7.
